# EUROPEAN PATENT SPECIFICATION

(11) **EP 0 869 720 B1**
(45) Date of publication and mention of the grant of the patent: **07.08.2002**
(21) Application number: 97940136.1
(22) Date of filing: 28.08.1997
(51) Int. Cl.: A23K 3/00, A23K 1/16

(54) **USE OF A COMBINATION OF CHLORAMINE-T AND PROPIONIC ACID IN FEEDSTUFFS**
VERWENDUNG EINER KOMBINATION VON CHLORAMIN-T UND PROPIONSÄURE IM TIERFUTTER
UTILISATION D'UNE COMBINAISON DE CHLORAMINE T ET DE L'ACIDE PROPIONIQUE DANS LES ALIMENTS POUR ANIMAUX

(30) Priority: 30.08.1996 IT MI961812
(43) Date of publication of application: 14.10.1998
(73) Proprietor: DOX-AL ITALIA S.p.A., I-20050 Correzzana Milano (IT)
(72) Inventor: VITTORIO, Francesco, I-21100 Varese (IT); GRABITZ, Ernst, I-22064 Casatenovo (IT)
(74) Representative: Gervasi, Gemma, Dr.
(86) International application number: EP9704683
(87) International publication number: WO9808398

(56) References cited:
- EP-A- 0 490 567
- WO-A-96/16555
- DE-A- 4 324 884
- DATABASE WPI Section Ch, Derwent Publications Ltd., London, GB; Class D13, AN 72-03122T XP002032762 & JP 47 000 319 B (KAO SOAP CO LTD) cited in the application
- DATABASE WPI Section Ch, Week 9722 Derwent Publications Ltd., London, GB; Class A97, AN 97-236348 XP002032763 & CN 1 098 884 A (BAI L) , 22 February 1995
- DATABASE WPI Section Ch, Derwent Publications Ltd., London, GB; Class D14, AN 70-79876R XP002032764 & JP 45 033 737 B (TOYO CHEM PHARM CO) cited in the application

## Description

### TECHNICAL FIELD

The present invention relates to the use of chloramine-T and propionic acid in feedstuff as a bactericidal, antiviral and mould-inhibiting active ingredient.

### BACKGROUND ART

As known, feedstuff must contain specific bactericidal agents or, in general, disinfectants.

By way of example, Carbadox, Olaquindox, Nitrovin are some of the bactericidal agents commonly used for this purpose.

Chloramine-T, i.e., N-chloro-4-methylbenzenesulfonamide sodium salt is a disinfectant generally used for application to floors, walls, medical apparatus, skin, wounds, and for water disinfection.

In the alimentary field, it is also used as a bactericide in milk and derivatives thereof, e.g., ice creams, cheese, eggs, in chicken- and mincemeat, in fish, etc .

It is also used on fish to treat the bacterial branchial disease (DE-A-4324884) and on cows to disinfect udders before milking.

WO96/16555 describes a method to disinfect food by exposing it to an electrically charged mist of disinfectants having a redox potential. EP-A-490567 describes the use of chloramine-T as stabilizer in 3-isothiazolone compositions. JP-B-47000319 and JP-B-45033737 describe the use of chloramine-T in food preservation.

### BRIEF DESCRIPTION OF DRAWINGS

### Figure 1

Time preceding fungal alteration, detected by calory production (self-heating dT°C), in a feedstuff, containing the following concentrations of chloramine-T: 0, 0.1, 0.2%. (initial water content 14.5%; temperature 21.5°C).

### Figure 2

Time preceding fungal alteration, detected by CO₂ production in a feedstuff, containing the following concentrations of chloramine-T: 0. 0.1, 0.2%. (initial water content 14.5%; temperature 21.5°C).

### DISCLOSURE OF THE INVENTION

The present invention relates to the subject-matter of claims 1 and 2.

In order to exert a suitable activity without toxicity to the animals. chloramine-T must be present in the feedstuff at a concentration comprised between 0.05% and 1% by weight.

The feedstuff according to the present invention are in the form typically foreseen for animal feeding, i.e. essentially solid and dry, thus differing from fresh food.

The present composition is especially adapted to prevent bacterial. viral or fungal contamination under the typical stockage conditions of feedstuffs, i.e contained in non-hermetic packages, silos, sacks, in proximity of highly polluted areas like animal sheds, stalls, under variable ambient temperature and humidity, and is adapted for long term storage.

The present composition is also adapted to provide no toxicity or chloramine buildup in the animal tissues; this prevents chloramine from entering the food chain.

Chloramine-T is added to feeds in the form of concentrated solid compositions, the so-called premix, or in the form of liquid or solid additives also containing preservatives, or in the form of an aqueous solution, where the solvent is thereafter evaporated. The solid or liquid concentrated compositions are prepared by addition of chloramine-T to the other ingredients following procedures well-known in the art: e.g. by mixing the components in a solvent under stirring, or by spraying the liquid components into a rotating pan containing the solid components.

The final feedstuff is prepared from the concentrated composition by dilution with further feed and evaporation of the solvent, if present, according to procedures known in the art.

The present invention also extends to concentrated solid compositions or premix.

The premix composition must have a chloramine-T content such to provide a final feedstuff containing the aforesaid amounts of chloramine-T.

Examples of premix compositions are those described and prepared according to European patents EP 197188 and EP 363733; furthermore, they include the following components:
a) a support selected from meals, wholemeals bran, or by-products thereof, gluten, sugars, proteic flours of animal or vegetable origin derived from fermentation, yeasts, wastes of industrial processes, derived from fermentation, or materials of mineral origin, such as vermiculite or calcium carbonate;
b) propionic acid and/or the salts thereof with alkali metals or alkaline earth metals.
c) non-ionic surfactants, such as propylene glycol monoesters with fatty acids used in the alimentary field (acetic acid, lactic acid, citric acid, tartaric acid, etc.);
d) antioxidants such as polyvinylpyrrolidone.

The decontaminant activity of chloramine-T and its effective use in feedstuffs is further described in the following experimental part.

### EXPERIMENTAL PART/THE FOLLOWING EXAMPLES DO NOT PERTAIN TO THE PRESENT INVENTION

In-vitro test of fungistatic effects of chloramine-Chloramine-T is dissolved in water at different concentrations, and is added to a sterylised culture medium. The medium is then infected with the following fungal strains, chosen among the most common feedstuff contaminants, responsible for mycosis, mycotoxicose, food intolerance. *Aspergillus flavus, Aspergillus fumigatus, Aspergillus ochraceus, Aspergillus niger, Penicillum cyclopium, Penicilium granulatum, Penicillum roqueforti, Fusarium moniliforme, Byssochlamys nivea, Rhizopus nigricans, Aspergillus gr.glaucus, Cladosporium herbarum, Wallemia ichthyophaga*

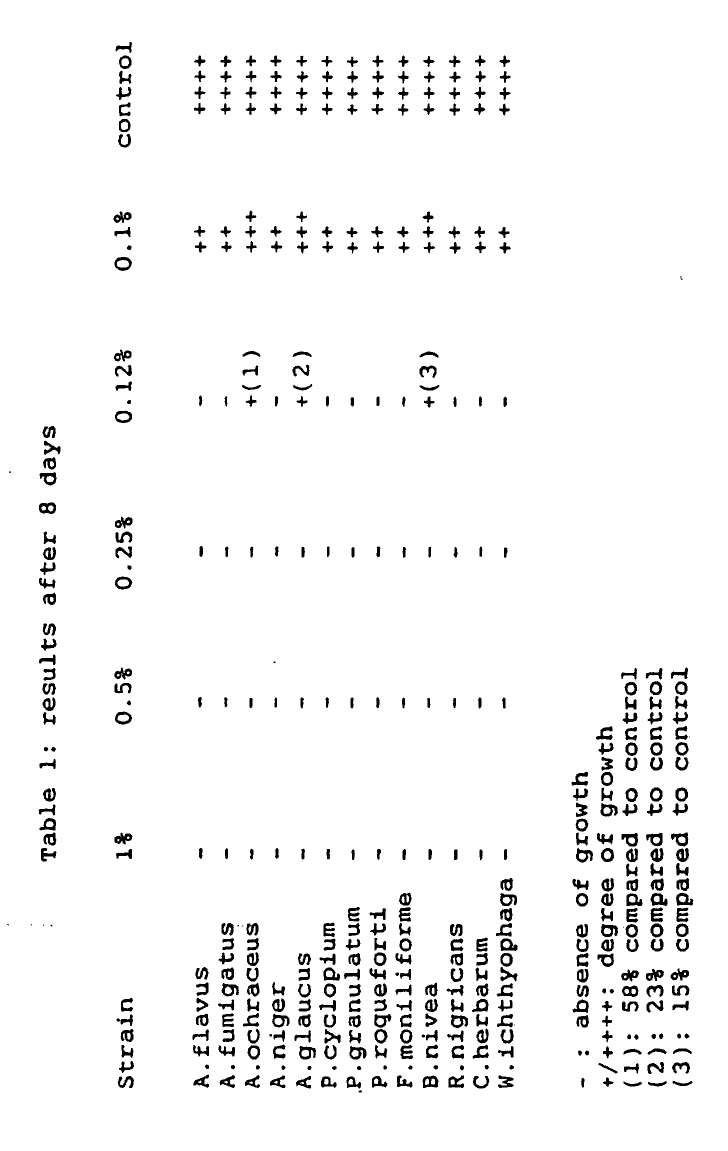

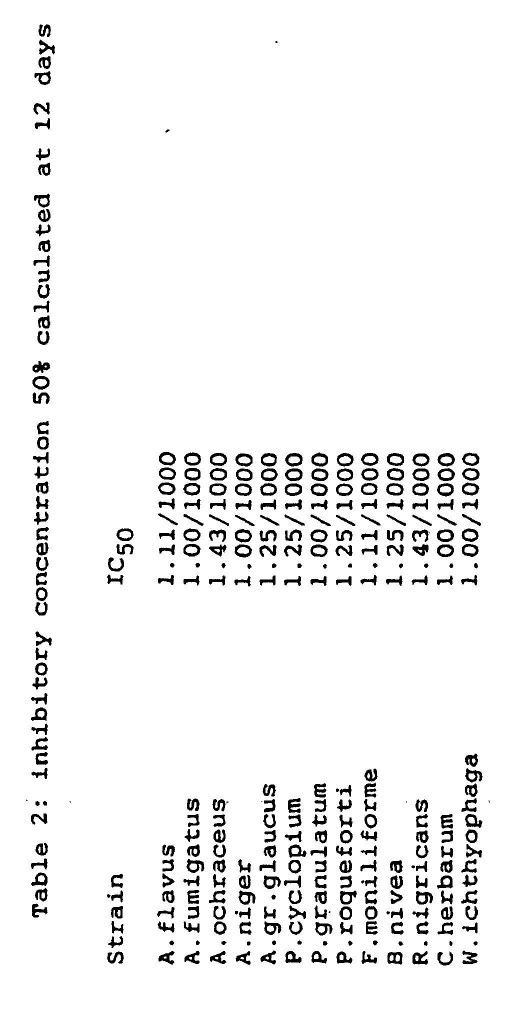

As show in tables 1-2, fungistatic effects can be observed at the concentration of 0.1%. With 0.12% chloramine-T, only three strains were moderately developed compared to the controls at 8 days. Two other species appeared at 12 days. With 0.25% chloramine-T, the fungostatic effect is total.

The IC₅₀ range is comprised between 1 and 1.43/1000.

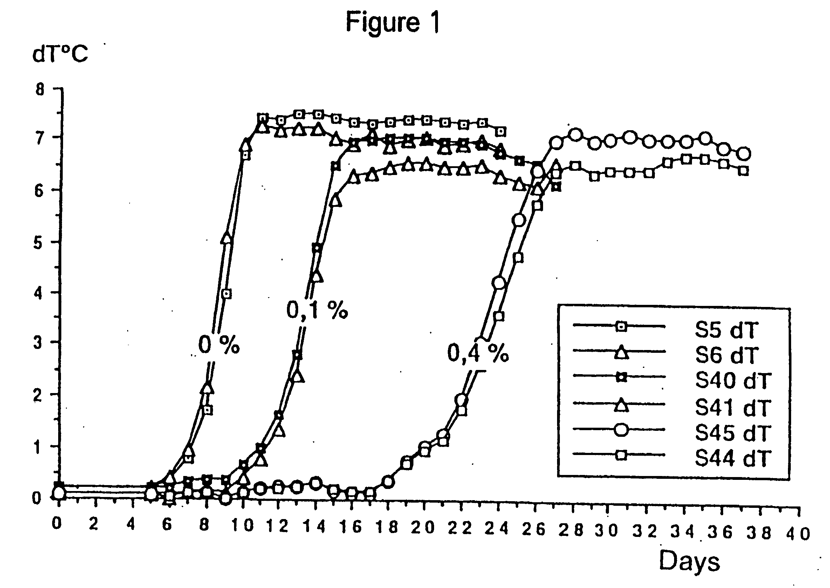

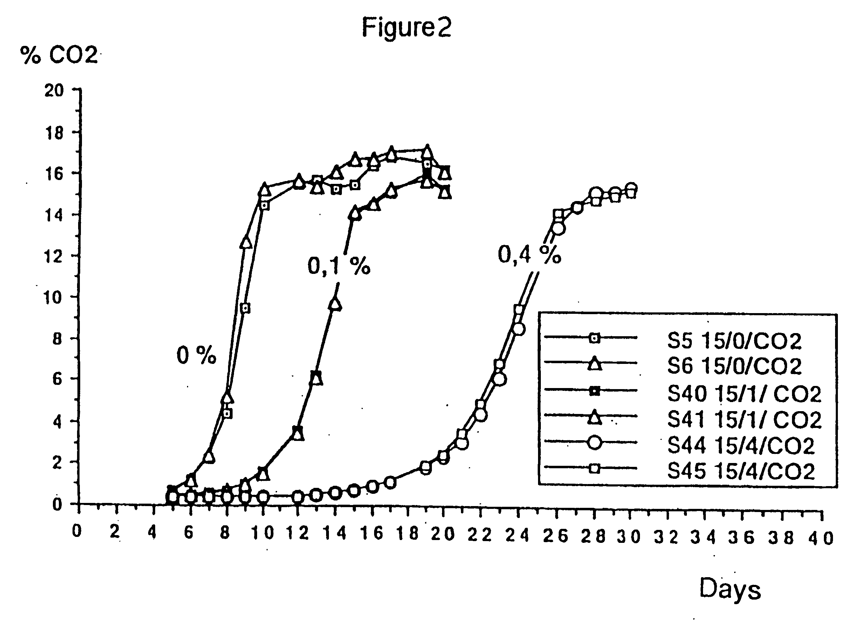

Similar fungostatic effects at the same concentrations could be observed when tested on natural substrate (feedstuff) as shown in figures 1-2.

### 2. Pharmacokinetics of chloramine-T in rats after single intravenous and oral administration

One hundred and sixty male Wistar rats (Charles river Inc., Margate, Kent, UK) each weighing 180-200 g were used. The animals were housed in polycarbonate cages with sawdust bedding and were maintained in environmentally controlled rooms (22±2°C and 50±10% relative humidity) with a 12 hr light/dark cycle (light from 8:00 to 20:00 hr). Food (a04 rodent diet, Panlab SL) an water were available *ad libitum.* These rats were divided into two groups of 80 animals each to receive chloramine-T given either oral or i.v..

Group 1 rats were deprived of food, but allowed water, for 12 hr before the single oral administration of chloramine-T (100 mg/Kg body weight). Group 2 rats were given a single i.v. injection of chloramine-T (30 mg/Kg body weight) into the lateral tail vein.

Groups of 8 animals each where then killed by exanguination at 0.08, 0.17, 0.25, 0.50, 1.00, 2.00, 4.00, 6.00, 8.00 and 12.00 hr after dosing. Blood samples were withdrawn and collected in heparinized tubes. Plasma was separated after centrifugation and stored frozen until analized. After oral dose, the liver, kidney, brain, lung, fat and ileum were rapidly removed at 0.08, 0.17, 0.25, 0.50, 1.00, 2.00, 4.00, 6.00, 8.00 and 12.00 hr after dosing. Each tissue sample was weighed and kept frozen until analized.

The concentration of chloramine-T in plasma and tissue samples was determined using HPLC as described by Beljaars and Rondags (J.Assoc.Off.Anal.Chem. 61(6), 1978, 1415). These concentration values were used for all pharmacokinetic determinations.

### Results and discussion

The dosages chosen in this experiment provide a chloramine intake similar to that obtained in animals eating normal quantities of the feedstuff disclosed in the present invention.

The kinetics of chloramine-T after 30mg/Kg i.v or 100 mg/Kg oral in rats were best described by a two-compartment open model, with a rapid elimination phase (t1/2 beta = 1.41 or 1.98 hr, respectively). These values suggest a good elimination of chloramine-T in body fluids including intracellular water (V_{d(ss)} 0.23 L).

The bioavailability of chloramine-T was relatively low (F 50.64%) following oral administration.

Although chloramine-T was distributed widely in the body, the time course analysis of the tissue concentrations revealed a rapid elimination half-life in all tissues investigated.

In conclusion, chloramine-T offers the possibility of effective treatment of feedstuff without displaying toxicity to the animal organism and without entering the food chain.

## Claims

1. Concentrated solid compositions or premix for feeds, containing chloramine-T as an active ingredient, further containing a) a support selected from the group consisting of meals, wholemeals, bran, or by-products thereof, gluten, sugars, proteic flours of animal or vegetable origin derived from fermentation, yeasts, wastes of industrial processes, derived from fermentation, or materials of mineral origin, such as vermiculite or calcium carbonate, other known preservatives c) non-ionic surfactants, d) antioxidants,
where the other preservatives are selected from the group consisting of propionic acid, and/or salts thereof, with alkali metals or alkaline earth metals.

2. Use of a concentrated solid composition or premix for feed according to claim 1 as a bactericidal, antiviral and mould-inhibiting active ingredient for the preparation of feedstuffs for cattle, sheep, pigs, birds.

## Patentansprüche

1. Konzentrierte feste Zusammensetzung oder Vormischung für Futtermittel, die Chloramin T als Wirkstoff enthält, und die ferner folgendes enthält: a) einen aus der Schrotmehl, Vollkorn, Kleie oder Nebenprodukte derselben, Gluten, Zucker, durch Gärung gewonnenes Eiweißpulver tierischen oder pflanzlichen Ursprungs, Hefen, durch Gärung gewonnene Abfallstoffe von Industrieprozessen oder Stoffe mineralischen Ursprungs wie Vermiculit oder Calciumcarbonat umfassenden Gruppe ausgewählten Träger, b) sonstige bekannte Konservierungsmittel, c) nichtionische Tenside, d) Antioxidationsmittel,
wobei die sonstigen Konservierungsmittel aus der aus Propionsäure und/oder Salzen derselben sowie Alkalimetallen oder Erdalkalimetallen bestehenden Gruppe ausgewählt sind.

2. Verwendung einer konzentrierten festen Zusammensetzung oder Vormischung für Futtermittel nach Anspruch 1 als antibakteriellen, antiviralen und die Schimmelbildung hemmenden Wirkstoff für die Herstellung von Futtermitteln für Rinder, Schafe, Schweine, Vögel.

## Revendications

1. Compositions ou prémélanges solides concentrés pour aliments pour animaux, contenant de la chloramine-T comme ingrédient actif, et contenant en outre a) un support choisi dans le groupe constitué par un repas, un repas complet, du son ou un de ses dérivés, du gluten, des sucres, des farines protéiques d'origine animale ou végétale dérivées de fermentation, des levures, des déchets de procédés industriels dérivés de fermentation ou des matériaux d'origine minérale tels que la vermiculite ou le carbonate de calcium, b) d'autres conservateurs connus, c) des tensioactifs non ioniques, d) des anti-oxydants, où les autres conservateurs sont choisis dans le groupe constitué par l'acide propionique et/ou ses sels avec des métaux alcalins ou des métaux alcalino-terreux.

2. L'utilisation d'une composition ou d'un prémélange solide concentré pour l'alimentation animale selon la revendication 1, comme ingrédient actif bactéricide, antiviral et inhibiteur de moisissure pour la préparation d'aliments pour le bétail, les ovins, les porcins, les oiseaux.
